# EUROPEAN PATENT APPLICATION

(11) **EP 2 498 074 A1**
(43) Date of publication of application: **12.09.2012**
(21) Application number: 11157221.0
(22) Date of filing: 07.03.2011
(51) Int. Cl.: G01K 15/00

(54) **Temperature Calibrator further Development**

(71) Applicant: Bronlund, Ole Einar, 1404 Siggerud (NO)
(72) Inventor: Brønlund, Ole Einar, 1404, Siggerud (NO)
(74) Representative: Hoel, Tor

(57) **Abstract**

An apparatus for calibration of temperature sensors is provided, comprising a cavity with a calibrator body for receiving a sensor to be calibrated, a heat-transferring medium for surrounding the sensor in the cavity, and a means for heating/cooling of the medium to a desired temperature. A pressure body is provided exerting an even pressure on the calibrator body wherein said pressure body is separated from a said calibrator body by a first membrane and on the opposite side of the calibrator body from the first membrane is a second membrane facing sensor to be calibrated.

## Description

### Technical Field

The invention relates to an apparatus for calibration of temperature sensors, comprising a cavity for receiving a sensor to be calibrated, a heat-transferring medium for surrounding the sensor in the cavity, and a means for heating/cooling of the medium to a desired temperature.

### Background Art

As components and equipment age, and also are subjected to temperature changes and mechanical strains, the critical capacity will decrease. This is called drift. When this happens, one can no longer rely on previous capacity tests, and this may result in poorer quality in development and production. Since one can not prevent drift, one must instead detect and eliminate the effect thereof by means of calibration.

As known, calibration is to compare the capacity of equipment to be calibrated with a known standard. The standards are maintained by national and international accredited calibration laboratories. To day, there are imposed aggravated demands on the industry with respect to measuring accuracy and quality assurance (ISO 9000), and there is then required calibrating equipment which satisfies the requirement of to day and complies with the new standards within temperature calibration.

The prior art traditionally includes two principal types of calibrators, namely liquid bath calibrators and dry block calibrators.

In addition to these there is the hybrid solution known from the international application PCT/N02000/000143 by the applicant and also granted as EP 1190228 B1, disclosing the use of a cavity made of pliable intermediate partitions wherein by subjecting the defining walls to a pressure the calibrator medium is brought into tight fitting abutment against the sensor.

This hybrid solution suffers from the disadvantages of:
- it is not trivial to find a wall material for the calibrator bodies that are elastic and thus enclose the thermometers optimally while also providing good thermal conductivity
- it is difficult to ensure uniform pressure of the calibrator bodies against the sensor to be calibrated
- there is a significant heat loss from the calibrator bodies to the walls of the jacket surrounding the calibrator bodies which also could cause problematic temperature gradients

Many of these issues make it difficult to make the apparatus for calibration compact and portable.

### Summary of the Invention

### Problems to be Solved by the Invention

Therefore, a main objective of the present invention is to provide an apparatus for calibration of temperature sensors that overcome the above problems.

It is an object of the invention to provide a solution that enables the use of a membrane material for the calibrator bodies that are elastic or pliable and thus enclose the thermometers optimally while also providing good thermal conductivity.

### Means for Solving the Problems

The object is achieved according to the invention by an apparatus for calibration of temperature sensors as defined in the preamble of claim 1, having the features of the characterising portion of claim 1.
Further advantageous embodiments of the invention are disclosed in the dependent claims of claim 1.

The present invention attains the above-described object by at least one pressure body exerting an even pressure on at least one calibrator body wherein each pressure body is separated from a respective calibrator body by a first membrane and on the opposite side of the calibrator body from the first membrane is a second membrane facing sensor to be calibrated.

It should be noted that in this disclosure the term pliable relates to a property of a material wherein the material can be bent or reshaped but maintains substantially the same dimensions along its surface. An example of this is fibre reinforced cloths. Similarly the term elastic relates to a property of a material wherein the material can be bent, reshaped and also stretched and/or compressed, modifying the dimensions along its surface. An example of this is rubber.

### Effects of the Invention

The technical differences over PCT/N02000/000143 are
- the pressurising function of the pressure bodies is separated from the thermal function of the calibrating bodies and applies a uniform pressure
- the calibrator bodies are separated from the walls of the jacket by the pressure bodies
- permits the use of different materials for the first and the second membrane and thus optimise the respective materials for the use

These effects provide in turn several further advantageous effects:
it makes it possible to find a membrane material for the calibrator bodies that are elastic and thus enclose the thermometers optimally while also providing good thermal conductivity
pressure bodies can be made from elastic materials where poor thermal conductivity is an advantage due to ability to isolate
membranes can be selected for optimal thermal transfer from filling of liquid through membranes to thermometer and is pliable but not necessarily elastic pressurising the pressure bodies assures the calibrator bodies are enclosed
the membrane that can be selected for calibration bodies can withstand a large temperature range and can be strengthened with for instance glass fibre reinforcement.

Also the use of a separate pressure body typically pressurised by air means that a separate oil accumulator for the calibrator body is not required which in turn reduces size and allows for a compact and portable size of the calibrator system.

### Brief Description of the Drawings

The invention will be further described below in connection with exemplary embodiments which are schematically shown in the drawings, wherein:
Fig. 1A shows a longitudinal section of a first embodiment of the apparatus according to the invention in a first state, along the line 1A - 1A in Fig. 1B;
Fig. 1B shows a cross-section along the line 1B - 1B in Fig. 1A;
Fig. 2 shows a cross-section of a second embodiment of an apparatus according to the invention in a first state;
Fig. 3 is a schematic drawing showing a calibrator body which is connected to a circulation system having a regulating circuit for regulating the temperature of the heat-transferring medium.
Fig. 4 shows an exploded view of the second embodiment of an apparatus according to the invention in a first state.

### Description of the Reference Signs

The following reference numbers and signs refer to the drawings

| | |
|---|---|
| 10, 100 | Apparatus for calibration |
| 12, 112 | Jacket |
| 14,114 | Insulating layer |
| 15, 115 | Elastic upper insulating layer |
| 16, 116 | Cavity |
| 20, 120 | Pressure body |
| 22, 122 | Connector to pressure body |
| 30, 130 | First membrane |
| 40, 140 | Calibration body |
| 42, 142 | Volume |
| 43, 143 | Heat transferring medium |
| 44, 144 | Inlet |
| 45, 145 | Inlet manifold |
| 46, 146 | Outlet |
| 47, 147 | Outlet manifold |
| 50, 150 | Second membrane |
| 60, 160 | Opening |
| 70,170 | Sensor |
| 80 | Clamp |
| 282 | Heat regulating unit |
| 283 | Heat regulating device |
| 286 | Temperature sensor |
| 287 | Accumulator for heat transferring medium |
| 288 | Pipeline |
| 289 | Pump for heat transferring medium |
| 292 | Pressure regulating pump |
| 296 | Pressure pipeline |

### Best Modes of Carrying Out the Invention

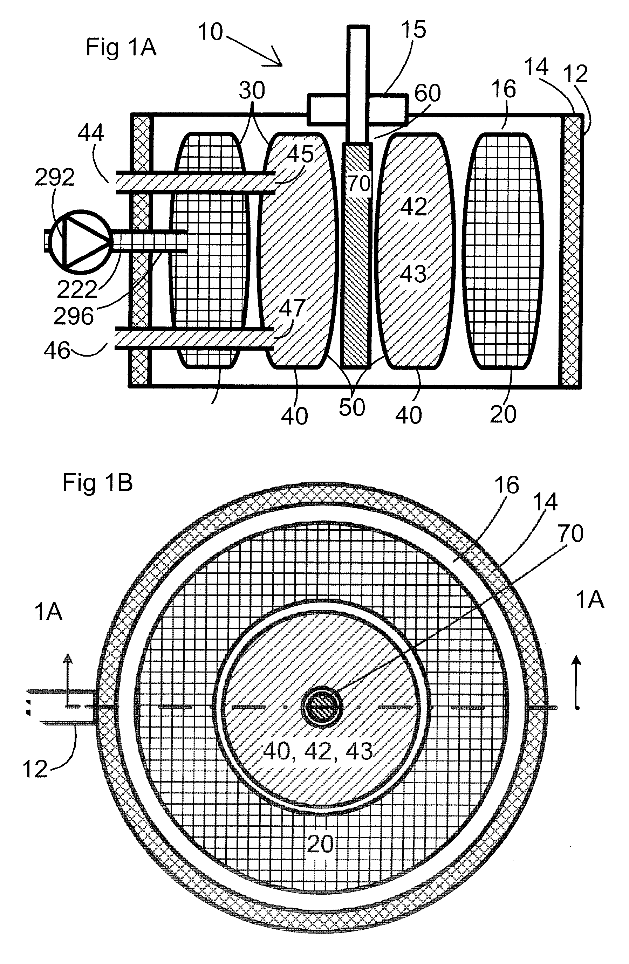

The embodiment of the apparatus according to the invention shown in Fig. 1A and 1B comprises a circularly cylindrical container constituting a jacket 12 of a suitable, for example metallic material. The jacket defines a cavity 16 in which a pressure body 20 is placed. Said pressure body defines a cavity in which there is placed a thin-walled calibrator body 40 which is made of a suitable elastic material having a high thermal conductivity, e. g. a rubber material which is suitable for use within the relevant temperature limits. The calibrator body 40 defines a volume 42 receiving the relevant heat-transferring medium 43 which may be a liquid or a gas. The pressure body 20 is also provided with means for producing an overpressure, and possibly also an underpressure, on the calibrator body 40.

The calibrator body 40 has an outer wall defined by a first membrane 30, and an inner wall defined by a second membrane 50 thus defining a central opening 60 extending along the longitudinal axis of the jacket 12 and being adapted to receive a temperature sensor 70 to be calibrated. At the upper side of the calibrator body 40, where the opening 60 debouches and the temperature sensor 70 is to be introduced, there is applied an elastic, heat-insulating material 15.

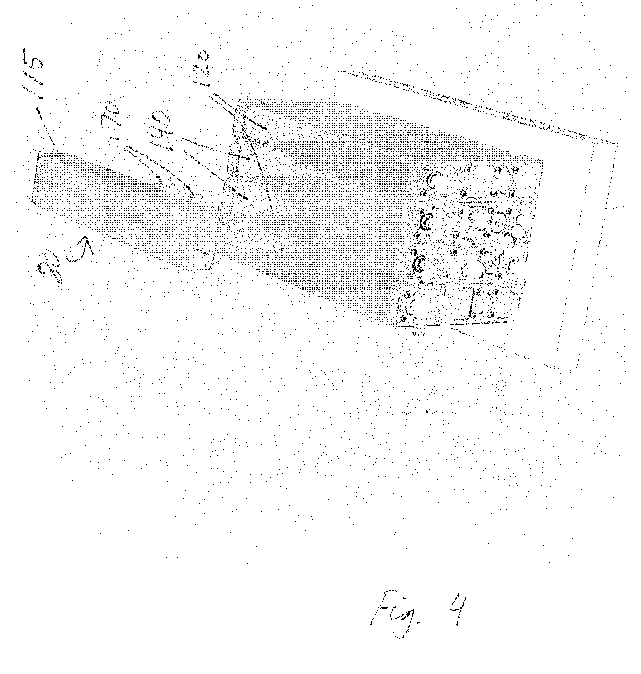

As shown in the figures, the calibrator body 40 is provided with an inlet 44 and an outlet 46 for connection to a circulation system, as further described in connection with Fig. 4. In addition to the fact that the circulation system provides forced through-flow of the medium 43 through the calibrator body 40, it is also provided with means for producing an overpressure, and possibly also an underpressure, in the medium in the calibrator body 40.

The placing of the inlets and outlets shown in the drawings is only meant as illustrating examples. In the embodiments shown they may for example be placed tangentially in order to produce a vortex-like flow in the container. Generally, one will aim at a placing and a structural design that provides an optimal and uniform distribution of the through-flow, thereby obtaining minimal temperature gradients.

In Figs. 1A and 1B, the apparatus is shown in a state wherein there is an underpressure in the medium 43. The inner wall of the calibrator body 40, i.e. the second membrane 50, then takes a position wherein it forms a suitable opening 60 for introduction of the temperature sensor 70 to be calibrated. When the sensor 70 has been introduced into the opening 60 the medium is subjected to an overpressure so that the second membrane 50 of the calibrator body is brought into tight-fitting abutment against the sensor 70. Thus a complete or approximately complete contact between the calibrator body 40 and the sensor is achieved, wherein the second membrane adapting itself to the shape of the sensor, to assure an optimum heat transfer.

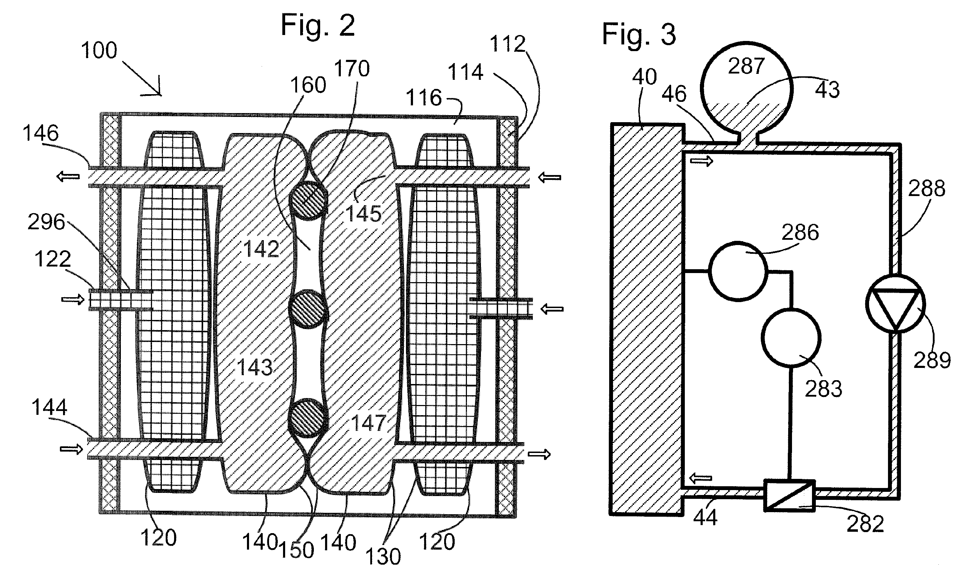

Fig. 2 show a second embodiment of the apparatus according to the invention. In this embodiment, the cavity-defining jacket 112 forms an upwardly open container having a rectangular cross-section as shown in Fig. 2, and having a cavity 116 in which there are placed two thin walled essentially equal pressure bodies 120. Said pressure bodies defines a cavity in which there are placed two thin-walled, essentially equal calibrator bodies 140 which may be formed from an elastic material, or possibly from a suitably deformable, pliable, but inelastic material. Each calibrator body 140 defines a volume 142 receiving the relevant heat-transferring medium 143 (gas or liquid).

Each calibrator body 140 has an outer wall defined by a first membrane 130, and an inner wall defined by a second membrane 150 thus defining a slot-shaped opening 160 extending centrally between a pair of opposite side walls of the container and being adapted for introduction and receipt of two or more sensors to be calibrated, in the illustrated case three sensors 170. One of these sensors possibly may be an extra reference sensor which will thus be subjected to a temperature and a thermal condition which is so similar to the condition of the sensor or sensors to be calibrated that it will constitute a very accurate calibration reference.

At the upper side of the calibrator bodies 140, where the slot 160 debouches and the sensors 170 are to be introduced, there is applied an insulation 115 of an elastic material.

In a similar manner as in the first embodiment, each calibrator body 140 further is provided with an inlet 144 and an outlet 146 for connection to a circulation system which provides for a forced appropriate through-flow of the medium 143 through the calibrator bodies 140, and for the provision of an overpressure in the medium when this is desired.

In Fig. 2, the apparatus is shown in a first state in which there is zero overpressure in the medium 143. The inner walls 28 of the calibrator bodies then take a position in which the slot 160 is open for introduction of the temperature sensors 170. In a second state in which the medium in the calibrator bodies is subjected to an overpressure, so that the second membrane 150 of the calibrator body is brought into tight-fitting abutment against the sensors 170, the walls having adapted themselves to the shape of the sensors.

Fig. 3 shows a calibrator body 40 which is connected to a circulation system comprising a regulating circuit for regulating the temperature of the medium, and possibly also the through-flow velocity thereof through the calibrator body.

Thus, the calibrator body 40 has an inlet 44, 144 and an outlet 46, 146 which are connected to a pipeline 288 having a pump 289 for circulation of the medium 43, 143. In the pipeline 288 there is further connected a heat-regulating unit 282 controlled by a regulating circuit 283. The regulating circuit supplies control signals from a number of temperature sensors 286 placed at appropriate places in the medium flow. The regulating circuit regulates supply or removal of heat energy via the unit 282, and it also controls the speed of the pump 289 and thereby the flow velocity of the medium, thus achieving the desired reference temperature of the medium in the calibrator body 40.

To the calibrator body there is also connected a volume regulating device in the form of an accumulator for heat transferring medium 287 for adjusting the volume of medium 43, and thereby the volume of the calibrator body. This device is shown to be connected to a pump 289 connected to a pipeline 288, the medium in this embodiment of the apparatus being presupposed to be a liquid.

The use of a gas may have advantages in case of extremely high or low temperatures.

The calibrator bodies are preferably internally equipped with a system of manifolds 45, 145, 47, 147 with nozzles for inlet- and outlet fluid flow, to assure a well distributed fluid flow, and hence an equal temperature distribution inside the calibration bodies. Nozzles for inlet, respective outlet, of the fluid should not be positioned directly opposite to each other, to prevent the fluid flow going directly from inlet to outlet, instead of distributing inside the calibrator body. The manifolds should be positioned in such a way that they secure optimal fluid flow and not preventing the thermometers from being enclosed. The manifolds are connected through tubes or pipes to a circulation pump, or a fan for gas.

The inlet manifold should optimally be placed near the bottom of the respective calibration body, and equipped with a number of nozzles to spread the fluid flow optimally. The nozzles should preferably have the main direction upwards and may have some angular spread to distribute the fluid flow. The sum of the cross sections of the inlet nozzles should correspond to cross section of the heat exchanger piping.
The outlet manifold should be optimally placed at the top of the respective calibration body, and preferably provided with a number of outlet nozzles, not corresponding to the positions of the inlet nozzles. Like the inlet nozzles, the outlet nozzles may have some angular spread; however the main direction should be downwards. The sum of the cross sections of the outlet nozzles should be somewhat smaller, about 20%, compared to the inlet nozzles.

To prevent the membrane of the calibrator body clinging to the outlet manifold and thus hindering the circulation around the manifold, it should be provided with comparatively deep threads or grooves. Since the cross sections of the inlet nozzles will normally be larger than for the outlet, so will also the manifolds, hence the vertical positioning of the manifolds will be the optimal for giving the thermometers space.

It is important that the temperature is uniform across all temperature sensors. Since temperature is changing with distance from outlet manifold, it has been found that the use of a counter flow in the two calibrator bodies provides improved uniform temperature along the length of the cavity. The counter flow is e.g. provided by ensuring that the fluid flow in the first calibrator body flows in the opposite direction from the fluid flow of the second calibrator body. Thus the thermal contact between the two calibrator bodies will even out the temperature distribution.

To the pressure bodies there is also connected a pressurising pump 292 via a pressurising pipeline 296 to the connectors 22, 122.

### Alternative Embodiments

A number of variations on the above can be envisaged. For instance heat insulating layer 14, 114 can be placed between the calibrator body 40, 140 and the jacket 12, 112 and the bottom of the container.

The first membrane 30, 130 between the pressure body and the calibrating body can either be a single membrane wherein the pressure body and the calibrating body are attached or a compound membrane, wherein the pressure body and the calibrating body can easily be detached from each other.

The second membrane 50, 150 can in an alternative embodiment be applied like a sheath over the sensor to be calibrated and then be inserted into the heat transferring medium. Optionally the collar of the sheath can be attached to the calibrating body to enable the heat transferring medium to be put under pressure without spilling said medium.

The membranes can also be made of graphene, thus combining strength, pliability with high thermal conductivity.

While the pressure body is typically defined by a separate thin walled body it can equally well be a volume defined by the calibrator body fitting tightly to the jacket, leaving a volume between the calibrator body and the jacket that can be pressurised.

The pressure bodies will give efficient thermal insulation of the calibration bodies of the sides adjacent. The thermal insulation will be even more efficient if the natural convection in the gas filling is hindered by filling a cell structured spongy material into the pressure bodies. The gas filling will be subject to a pressure increase, or a pressure drop dependent upon the temperature, following the State Equation of ideal gases. To compensate for this effect, the simplest solution may be to connect the gas filling of the pressure bodies to a pressure reservoir subject to the temperature of the ambient, or controlling the temperature and hence the pressure..

If the thin walled material of the calibrator bodies is pliable, but not elastic, the calibrator bodies are allowed to change the volume in order to have the thin walled material embracing the thermometers. This is obtained by carrying the manifolds at one end applying a bushing, permitting the manifolds to slide freely in the longitudinal direction. The bushing should have a slot in order not to hindering the fluid flow from, or into the nozzles. It may be feasible also to apply a hydraulic accumulator, to help changing the volume of the fluid inside the calibrator body. In this case, the air filling of the hydraulic accumulator should stay in free contact with the air in the pressure bodies.

A device for holding thermometers in an apparatus for calibration according to the present invention, preferably built of a material giving good thermal insulation, and being easy to machine, comprising two substantially parallel pieces, being hinged together at one end and shaped/adjusted, individually, to hold/clamp the thermometers of different geometry. The device, called a clamp 80, keeping the thermometers, is together with the thermometers to be calibrated and together with the reference thermometer, inserted in the slot above the calibration bodies, and kept in place by the thermal insulation between the inner and the outer calibrator box. Hence the thermometers to be calibrated, together with the reference thermometer, are, usually manually, clamped into a fixed position in the opening and inserted into the slot between the calibrator bodies, before imposing pressure into the pressure bodies.

In the first state in which there is zero overpressure there is a tendency for the calibrator body 40, 140 to sag, particularly if the calibrator body is filled with a liquid heat transferring medium 43, 143. This problem can be overcome by attaching a member to the calibrator body with stiffness and size sufficient to overcome the sagging due to the heat transferring medium acting under gravity. This part can also be attached to the jacket 12, 112.

### Industrial Applicability

The invention according to the application can be made compact and portable, and thus suited for calibrating devices in the field.

## Claims

1. An apparatus for calibration of temperature sensors, comprising:
a cavity (16, 116) for receiving a sensor (17, 170) to be calibrated,
a heat-transferring medium (43, 143, 243) for surrounding the sensor in the cavity, and
means (282) for heating/cooling of the medium to a desired temperature,
wherein the cavity (16, 116) for receiving at least one sensor surrounding thin-walled calibrator body (40, 140) which is made of a pliable material having a high thermal conductivity and which defines a volume (42, 142) which is filled of the heat transferring medium,
the calibrator body (40, 140) having an inner wall (50, 150) defining at least a part of an inner opening (60, 160) for receiving at least one sensor (70, 170), and being arranged to be subjected to a pressure bringing the opening-defining wall (50, 150) of the calibrator body into tight-fitting abutment against the sensor (70, 170) or sensors (70, 170),
**characterised in** further comprising a pressure body (20, 120) operating on the calibration body (40, 140) to apply pressure to said calibrating body.

2. An apparatus according to claim 1, **characterised in that** the pressure body (20; 120) or each pressure body is connected to a pressure-and volume-regulating device (292) arranged to place the calibrator body containing the heat-transferring medium (43, 143, 243) under an overpressure, thereby to bring the calibrator body into tight-fitting abutment against the at least one sensor (70, 170).

3. An apparatus according to claim 1 or 2, **characterised in that** the heat transferring medium (43, 143) is a liquid or a gas.

4. An apparatus according to one of the claims 1-3, **characterised in that** the at least one pressure body (20, 120) is surrounded by a heat-insulating material (14, 114) which is placed in a cavity-defining jacket (12, 112).

5. An apparatus according to claim 4, **characterised in that** the jacket (12) forms an essentially circularly cylindrical container in which the calibrator body (3) is correspondingly shaped, thus defining a central opening (60) extending along the longitudinal axis of the container and being adapted to receive a sensor (70) to be calibrated.

6. An apparatus according to claim 4, **characterised in that** the jacket (112) forms a container having an essentially rectangular cross-section and in which there is placed at least one calibrator body (140) defining a slot-shaped opening (160) extending centrally between to opposite sides of the container and being adapted to receive two or more sensors (170) to be calibrated.

7. An apparatus according to one of the preceding claims, **characterised in that** the material of the calibrator body (40, 140) is elastic.

8. An apparatus according to one of the preceding claims, **characterised in that** the side of the wall (30, 50, 130, 150) of the calibrator body (40, 140) facing the heat-transferring medium (43, 143, 243) has a surface-increasing structure ensuring maximum heat transfer, whereas the side of the wall (50, 150) facing a sensor body (70; 170) has a structure ensuring optimum contact surface and heat transfer.

9. An apparatus according to claim 8, **characterised in that** the surface-increasing structure consists of ribs, unevenesses or the like.

10. An apparatus according to one of the preceding claims, **characterised in that** the calibrator body or each calibrator body (40, 140) is provided with an inlet (44, 144, 244) and an outlet (46, 146, 246) for connection to a circulation system (288, 289) having a pump (289) for forced circulation of the heat-transferring medium (43, 143, 243) through the calibrator body (40, 140).

11. An apparatus according to claim 10, **characterised in that** the means (282) for heating cooling of the heat- transferring medium (43, 143, 243) is connected in the circulation system (288, 289) and is controlled by a regulating circuit (283) supplying control signals from a number of temperature sensors (286) placed in the medium flow, and which also is arranged to influence said pump (289) to adjust the flow velocity.

12. An apparatus according to claim 10 or 11, **characterised in that** the outlet (46, 146, 246) are provided with nozzles that direct the flow in opposite directions along the opening (60, 160) to create a counter current thereby improving the uniformity of temperature over the length of the opening.

13. A clamp (80) for holding temperature sensors (70, 170) in an apparatus according to claim any of the preceding claims, **characterised in** comprising two substantially parallel pieces of a thermally insulating material for clamping the temperature sensors into a fixed position in the opening (60, 160).
